# EUROPÄISCHE PATENTSCHRIFT

(11) **EP 0 565 217 B1**
(45) Veröffentlichungstag und Bekanntmachung des Hinweises auf die Patenterteilung: **23.10.1996**
(21) Anmeldenummer: 93250106.7
(22) Anmeldetag: 08.04.1993
(51) Int. Cl.: H01M 2/10

(54) **Eigensichere Stromversorgung für ein in explosionsgefährdeten Bereichen eingesetztes Messgerät**
Failsafe power supply for a measuring apparatus used in potentially explosive environment
Dispositif d'alimentation à sécurité intrinsèque pour un instrument de mesure utilisé dans un environnement susceptible d'explosion

(30) Priorität: 09.04.1992 DE 4211908
(43) Veröffentlichungstag der Anmeldung: 13.10.1993
(73) Patentinhaber: AUERGESELLSCHAFT GMBH, D-12059 Berlin (DE)
(72) Erfinder: Hoffmann, Detlef, W-8000 München 81 (DE); Misera, Herbert A., W-1000 Berlin 47 (DE)

(56) Entgegenhaltungen:
- DE-A- 4 017 654

## Beschreibung

Die Erfindung betrifft eine eigensichere Stromversorgung für ein in explosionsgefährdeten Bereichen verwendetes Meßgerät, bestehend aus einer in einem Gehäuse angeordneten auswechselbaren Batterie mit strombegrenzendem Bauteil und einem Anschlußteil zur Verbindung mit der elektronischen Schaltung des Meßgerätes.

Für in explosionsgefährdete Bereiche mit gefährlichen Gas-Dampf- oder Gas-Luftgemischen eingesetzte elektrische Meßgeräte sind besondere Voraussetzungen und Vorschriften im Hinblick auf die Ausbildung dieser Meßgeräte aus sicherungstechnischen Gründen zu beachten. Danach sind die elektrischen Bauteile der Geräte, die explosionsfähige Gemische zünden können, derart zu sichern, daß Funkenbildungen im Innern der Geräte zu keiner Explosion der das Gerät umgebenden Gemische führen können.
Es ist bekannt, den Explosionsschutz durch Eingießen der in einem abgeschlossenen Gehäuse untergebrachten Batterien zusammen mit ihren strombegrenzenden elektronischen Bauteilen in Kunstharz zu erreichen. Dies hat den Nachteil, daß im Falle eines Defektes einer oder mehrerer Batterien der gesamte Batterieblock mit den strombegrenzenden Bauteilen und den Anschlußteilen für die elektronische Schaltungsanordnung des Meßgerätes gegen einen neuen ausgetauscht werden muß. Die im Gehäuse fest eingegossenen Batterien können im Schadensfall nicht ausgetauscht werden.

Es ist weiterhin ein Batterieblock für eine auswechselbare Batterie in einem wannenartigen Gehäuse bekannt, in dessen Boden die strombegrenzenden Bauteile eingegossen und die Anschlußkontakte für die Batterie sowie die Anschlußleitung zum Anschluß an die elektronische Schaltung des Meßgerätes aus dem Vergußteil herausgeführt und frei zugänglich sind. Die Batterie wird zur Kontaktnahme mit den Anschlußkontakten von oben in das offene Gehäuse eingesetzt. Das offene Gehäuse ist hierbei gegenüber der elektronischen Schaltung des Meßgerätes lediglich durch eine unterhalb der Schaltung im Meßgerät selbst angeordnete Zwischenwand abgedeckt, die nur teilweise die eingelegte Batterie abdeckt. Hierbei liegen die Anschlußkontakte zur elektronischen Schaltung frei und diese ist bei einem Batteriedefekt vor einem auslaufenden Batterie-Elektrolyt nicht geschützt. Darüber hinaus können im Fehlerfall innerhalb der Stromversorgung auftretende Erwärmungen der elektrischen Bauteile frei abgeführt werden, was für die angeschlossene Schaltung des Meßgerätes nachteilig ist.

Der Erfindung liegt deshalb die Aufgabe zugrunde, eine eigensichere Stromversorgung für ein im explosionsgefährdeten Bereich eingesetztes Meßgerät zu schaffen, die die elektronische Schaltung des Meßgerätes vor auslaufendem Batterie-Elektrolyt schützt und eine unzulässige örtliche Erwärmung im Fehlerfall verhindert.

Diese Aufgabe wird durch die im Patentanspruch 1 im kennzeichnenden Teil angegebenen Merkmale gelöst.

Die mit der Erfindung erzielten Vorteile bestehen insbesondere darin, daß mit einfachen Mitteln die Stromversorgung eine kompakte Baueinheit bildet, die explosions- und eigensicher ist sowie im Störfall die elektronische Schaltung des Meßgerätes vor auslaufendem Batterie-Elektrolyt und unzulässiger örtlicher Temperaturabstrahlung schützt. Darüber hinaus kann diese Stromversorgung als eine kompakte Baueinheit jeder Schaltung eines Meßgerätes separat zugeordnet werden.

Die Erfindung wird anhand eines in der Zeichnung dargestellten Ausführungsbeispiels näher erläutert. Es zeigt
- Fig. 1: eine Schnittdarstellung der erfindungsgemäßen Stromversorgung, und
- Fig. 2: eine Schnittdarstellung gemäß Schnitt A - B der Fig. 1

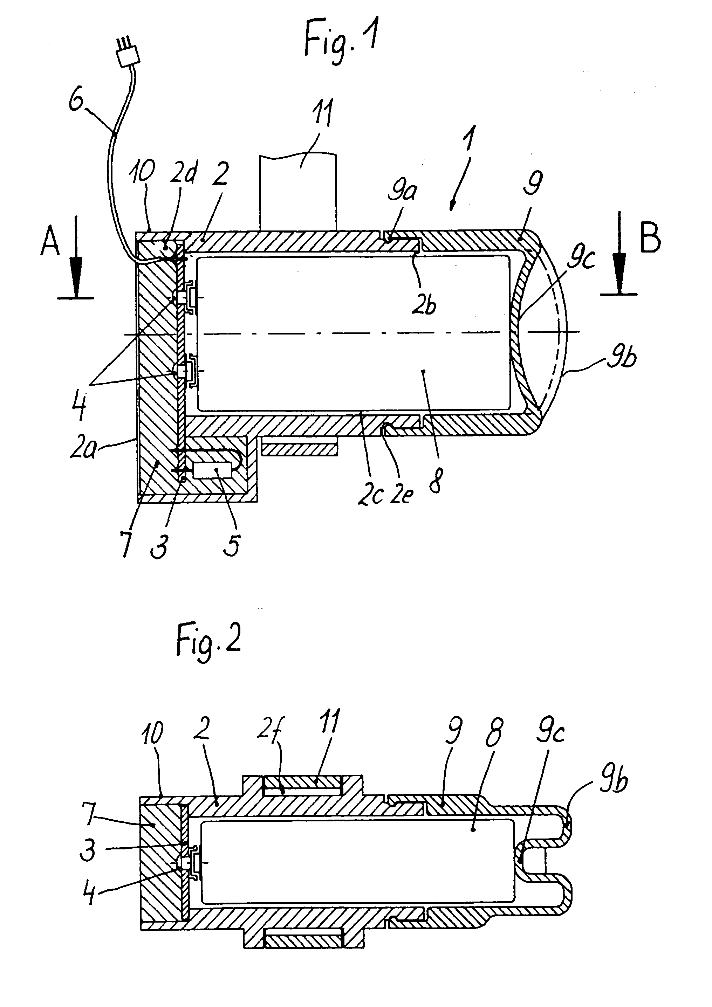

Wie aus Fig. 1 ersichtlich ist, besteht die Stromversorgung 1 aus einem Gehäuse 2 mit jeweils zwei offenen Gehäuseseiten 2 a und 2 b, wobei in die eine offene Gehäuseseite 2 a eine elektrische Leiterplatte 3 mit darauf angeordneten Kontaktstiften 4, einem strombegrenzenden Bauteil 5 und einer zum Anschluß an ein Meßgerät zur Stromversorgung vorgesehenen Anschlußleitung 6 angeordnet ist und das Gehäuse 2 in eine Batteriekammer 2 c und in eine Vergußkammer 2 d unterteilt. Die Vergußkammer 2 d ist mit einer Vergußmasse 7 ausgefüllt, die die Leiterplatte 3 und die darauf angeordneten elektronischen Bauteile 4, 5 und 6 vollständig umhüllt und nach außen verkapselt. In die Batteriekammer 2 c ist eine Batterie 8 eingesetzt, die mit einem Teil aus der Kammer herausragt. über dieses Teil und die Batteriekammer 2 c ist eine Abdeckkappe 9 unverlierbar aufgesteckt. Die Abdeckkappe 9 dient als Schutzhülle für die Batteriekammer 2 c, die bei einem Batteriedefekt eventuell auslaufendes Batterie-Elektrolyt zurückhält und somit die elektrische Schaltung des Meßgerätes davor schützt. Die aus einem elastischen oder festen Material hergestellte Abdeckkappe 9 ist an der Innenseite der Kammeröffnung mit einer ringsumlaufenden Wulst 9 a versehen, die beim Aufstecken der Kappe auf das Gehäuse 2 in eine der Außenkontur der Wulst entsprechenden Ausnehmung 2 e abdichtend und fest eingreift.An der Stirnseite des geschlossenen Kappenteils 9 b ist ein in das Innere der Kappe 9 weisendes Rippenteil 9 c angeformt. Wenn die Abdeckkappe 9 auf das Gehäuse 2 aufgesteckt ist, dann drückt das Rippenteil 9c gegen die Batterie 8 an und fixiert die Batterie im Gehäuse 2 und an die Kontaktstifte 4. Das Gehäuse 2 ist vorteilhaft als ein Kühlkörper ausgeführt, damit im Falle einer Störung die an den Schutzwiderständen bzw. an dem strombegrenzenden Bauteil 5 auftretende Wärme über die Vergußmasse 7 an die Kühlflächen des Gehäuses abgeführt werden kann. Wegen der erforderlichen Wärmeleitung ist das Gehäuse aus Metall oder aus Kunststoff hergestellt, wobei der letztere mit einer Metallbeschichtung 10 versehen ist. Die Stromversorgung 1 bildet eine kompakte Funktionseinheit, die als ein Modul einem Meßgerät zugeordnet und an dieses mittels eines Montageelementes 11 befestigt werden kann, das in einer Aussparung 2 f im Gehäuse 2 angeordnet ist.

## Patentansprüche

1. Eigensichere Stromversorgung für ein in explosionsgefährdeten Bereichen eingesetztes Meßgerät, bestehend aus einer in einem Gehäuse (2) angeordneten auswechselbaren Batterie (8) mit strombegrenzendem Bauteil (5) und einem Anschlußteil (6) zur Verbindung mit einer elektronischen Schaltung des Meßgerätes, dadurch gekennzeichnet, daß
a) in dem Gehäuse (2) eine Leiterplatte (3) zur Aufnahme der strombegrenzenden Bauteile (5) und der Batteriekontaktstifte (4) sowie dem Anschlußteil (6) angeordnet ist, wobei die Leiterplatte (3) das Gehäuse (2) in eine die Batterie (8) aufnehmende Batterie-Kammer (2 c) und in eine mit einer Vergußmasse (7) ausgefüllte Vergußkammer (2 d) unterteilt, und
b) über die Batterie-Kammer (2 c) und Batterie (8) eine Abdeckkappe (9) unverlierbar angeordnet ist.

2. Eigensichere Stromversorgung nach Anspruch 1, dadurch gekennzeichnet, daß das Gehäuse (2) als ein Kühlkörper ausgebildet ist, der eine wärmeleitende Beschichtung (10) aufweist.

3. Eigensichere Stromversorgung nach Anspruch 1 und 2, dadurch gekennzeichnet, daß die Abdeckkappe (9) an der Innenseite der Kappenöffnung eine ringsumlaufende Wulst (9 a) aufweist, die in eine im Gehäuse (2) als entsprechendes Gegenstück ausgebildete Ausnehmung (2 e) eingreift.

4. Eigensichere Stromversorgung nach Anspruch 1 und 3, dadurch gekennzeichnet, daß an der Stirnseite (9 b) des Kappenteils (9) ein in das Innere der Kappe weisendes Rippenteil (9 c) angeordnet ist.

## Claims

1. Intrinsically safe power supply for a measuring instrument used in areas subject to explosion hazard, consisting of an replaceable battery (8) arranged in a housing (2) with a current limiting device (5) and a connection part (6) for connecting with an electronic circuit of the measuring instrument, characterized by the fact that
a) a printed circuit board (3) for mounting the current limiting devices (5) and the battery contact pins (4) as well as the connection part (6) is arranged in the housing (2), with the printed circuit board (3) dividing the housing (2) into a battery chamber (2c) to accommodate the battery (2) and a grouted chamber (2d) filled with a casting compound (7), and
b) a captive cover (7) is arranged above the battery chamber (2c) and the battery.

2. Intrinsically safe power supply according to claim 1, characterized by the fact that the housing (2) is designed as a heat sink with a heat-conducting coating (10).

3. Intrinsically safe power supply according to claims 1 and 2, characterized by the fact that the cover (9) has a bulge(9a) running round the circumference of the inside of the cover opening, which engages in a corresponding recess (2e) formed in the housing (2).

4. Intrinsically safe power supply according to claims 1 and 3, characterized by the fact that a ribbed part (9c) facing the inside of the cover is arranged at the front face (9b) of the cover (9).

5. Intrinsically safe power supply according to claim 1, characterized by the fact that the housing (2) has a recess (2f) in which an assembly element (11) for the connection with the measuring instrument is arranged.

6. Intrinsically safe power supply according to claims 1 and 5, characterized by the fact that the power supply (1) is built as a compact operating unit, which as a module can be adapted and assigned to a wide variety of measuring instruments.

## Revendications

1. Alimentation électrique à sécurité intrinsèque pour un appareil de mesure utilisé dans des endroits exposés aux risques d'explosion, composée d'une batterie (8) remplaçable placée dans un boîtier (2) comportant un composant (5) limiteur de courant et une pièce de raccordement (6) pour relier l'alimentation électrique à un branchement électronique de l'appareil de mesure, caractérisé par
a) la présence dans le boîtier (2) d'une carte de circuits imprimés (3), comportant les composants (5) limiteurs de courant et les fiches de contact (4) de la batterie ainsi que la pièce de raccordement (6), la carte imprimée (3) divisant l'espace intérieur du boîtier (2) en un compartiment (2c) abritant la batterie (8) et un autre compartiment (2d) rempli d'une masse de remplissage (7)
b) et par un couvercle (9) imperdable placé au-dessus du compartiment de la batterie (2c) et de la batterie (8).

2. Alimentation électrique à sécurité intrinsèque selon la spécification 1, caractérisée par le fait que le boîtier (2) est formé comme un refroidisseur muni d'un revêtement conducteur de chaleur (10).

3. Alimentation électrique à sécurité intrinsèque selon les spécifications 1 et 2, caractérisée par le fait que le couvercle (9) situé sur la face interne de l'ouverture forme un bourrelet (9a) sur tout le pourtour, qui rentre dans un renfoncement (2e) du boîtier (2) qui en épouse parfaitement la forme.

4. Alimentation électrique à sécurité intrinsèque selon spécifications 1 et 3, caractérisée par le fait que sur l'avant (9b) du couvercle (9) se trouve une ailette (9c) dirigée vers l'intérieur du couvercle.

5. Alimentation électrique à sécurité intrinsèque selon la spécification 1, caractérisée par le fait que le boîtier (2) présente un évidement (2f) logeant un élément de montage (11) servant de liaison avec l'appareil de mesure.

6. Alimentation électrique à sécurité intrinsèque selon les spécifications 1 et 5, caractérisée par le fait que l'alimentation électrique (1) se présente comme une unité de fonctionnement compacte, sorte de module que l'on peut attribuer et adapter au cas par cas, aux appareils de mesure les plus variés.
